# EUROPÄISCHE PATENTSCHRIFT

(11) **EP 0 627 133 B1**
(45) Veröffentlichungstag und Bekanntmachung des Hinweises auf die Patenterteilung: **11.10.1995**
(21) Anmeldenummer: 93903806.3
(22) Anmeldetag: 18.02.1993
(51) Int. Cl.: H02H 3/16

(54) **FEHLERSTROMSCHUTZSCHALTER**
FAULT-CURRENT PROTECTIVE SWITCH
DISJONCTEUR DE COURANT DE FUITE

(30) Priorität: 20.02.1992 DE 4205208
(43) Veröffentlichungstag der Anmeldung: 07.12.1994
(73) Patentinhaber: SIEMENS AKTIENGESELLSCHAFT, 80333 München (DE)
(72) Erfinder: POHL, Felix, D-8520 Erlangen (DE)
(86) Internationale Anmeldenummer: DE9300142
(87) Internationale Veröffentlichungsnummer: WO9317479

(56) Entgegenhaltungen:
- DE-A- 3 537 140

## Beschreibung

Die Erfindung bezieht sich auf einen Fehlerstromschutzschalter, der ein Schaltschloß mit einem Magnetauslöser und Mittel zur Selbstüberwachung enthält.

Zum Schutz gegen gefährliche Körperströme sind bekanntlich spannungsunabhängige Fehlerstromschutzschalter (FI-Schalter) oder netzspannungsabhängige Differenzstromschutzschalter (DI-Schalter) vorgesehen, die im Fehlerfall den Stromkreis in kurzer Zeit, beispielsweise innerhalb 0,2 s, abschalten. Ein solcher DI-Schalter kann beispielsweise einen Summenstromwandler enthalten, dessen Magnetisierungszustand mit Hilfe einer Wechselstromvormagnetisierung abgefragt wird. Der Fehlerstrom ändert das Signal im Sekundärkreis des Summenstromwandlers und diese Signaländerung wird zur Auslösung des DI-Schalters verwendet. Der Sekundärkreis des Summenstromwandlers kann auch eine Meßkapazität enthalten, die mit der Induktivität des Summenstromwandlers einen Schwingkreis bildet, dessen aufgenommene elektrische Leistung sich mit der Amplitude des Fehlerstromes ändert. Die Spannungsänderung am Meßkondensator kann durch eine Meßschaltung erfaßt werden, die einen Doppelweggleichrichter mit Dioden enthält. Mit dem Doppelweggleichrichter sind Vorspannungswiderstände in Reihe geschaltet. Dieser Meßschaltung ist ein Komparator zugeordnet, dessen Ausgangssignal dem Auslöser des Fehlerstromschutzschalters zugeführt wird. Der Auslösestromkreis ist über einen Rechteckgenerator an eine getrennte Versorgungsspannung angeschlossen. Ein solcher Fehlerstromschutzschalter, der Mittel zur Kompensation der Temperaturabhängigkeit der Diodendurchlaßspannung enthält, ist Gegenstand der EP-A-0 416 422.

Fehlerstromschutzschalter sind im allgemeinen mit einem Schaltschloß versehen, das einen Magnetauslöser enthält, der als Haltemagnet oder als Sperrmagnet ausgeführt sein kann. Seine Magnetspule kann entweder als Arbeitsstromspule oder als Ruhestromspule betrieben werden. Aus der DE-A-35 37 140 ist ein solcher Fehlerstromschutzschalter mit einem Summenstromwandler und einer Grenzwertschaltung bekannt, der auch bereits Mittel zur Selbstüberwachung enthalten soll. Die Selbstüberwachung wird dabei dadurch realisiert, daß man in eine zusätzliche Wicklung des Summenstromwandlers periodisch kurzzeitig einen Strom einspeist, welcher einen Fehlerstrom simuliert. Die dadurch am Ausgang der Grenzwertschaltung entstehende Pulsspannung wird einer Auswerteschaltung zugeführt, die beim Ausbleiben der periodischen Impulse über die elektromagnetische Halteeinrichtung ein Öffnen der Schaltkontakte bewirkt.

Bei FI-Schaltern, deren durch einen Dauermagneten arretiertes Schaltschloß durch eine Arbeitsstromspule entregt wird, ist bei Stromunterbrechung eine Auslösung nicht möglich. Bei FI-Schaltern, deren Schaltschloß durch eine Ruhestromspule gehalten wird, ist dagegen bei Netzausfall ein erneutes Einschalten erforderlich.

Ausgehend von obigem Stand der Technik liegt der Erfindung die Aufgabe zugrunde, einen FI-Schalter mit einem DI-Zusatz und für die dazu notwendige elektrische Auswerteschaltung eine eigensichere Selbstüberwachung anzugeben.

Diese Aufgabe wird erfindungsgemäß gelöst mit den kennzeichnenden Merkmalen des Anspruchs 1. Mit einer Überwachungsschaltung, die einen Arbeitsstromkreis mit einer Kompensationsspule und einen Ruhestromkreis mit einer Haltespule enthält, deren Ruhestrom Erkennungsimpulse überlagert sind, wird der FI-Schalter nicht nur beim Auftreten eines Fehlerstromes, sondern auch bei einer Störung innerhalb der Steuerelektronik ausgelöst.

Weitere besonders vorteilhafte Ausgestaltungen ergeben sich aus den Unteransprüchen.

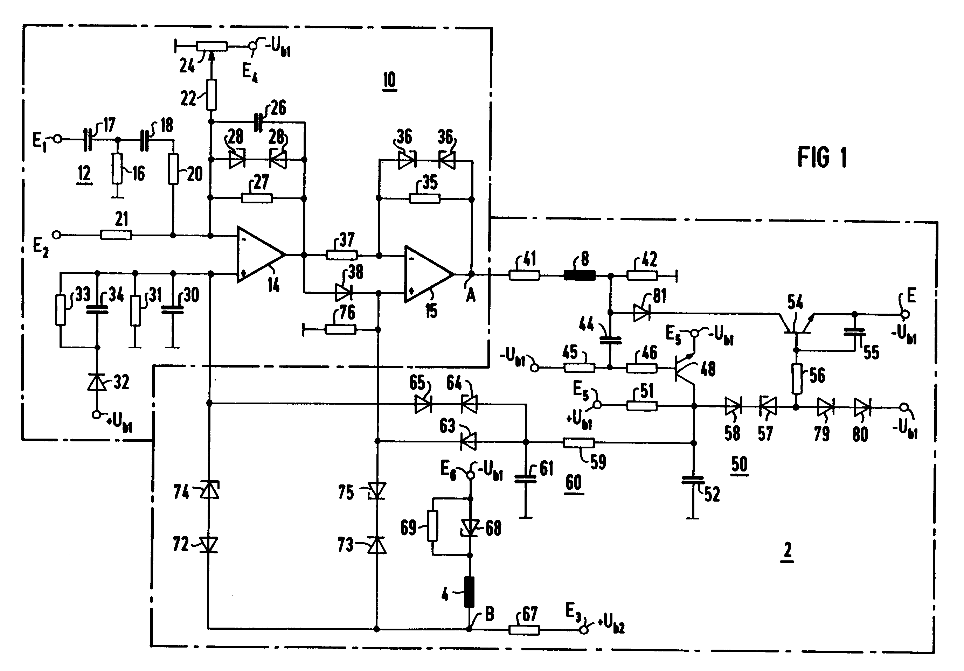

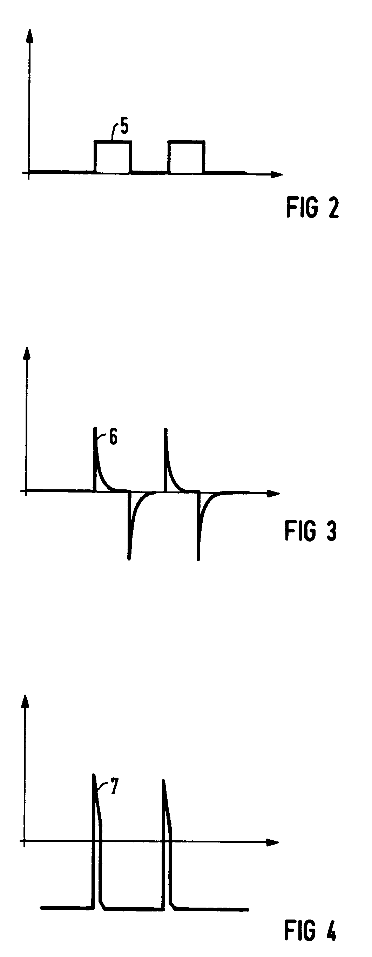

Zur weiteren Erläuterung der Erfindung wird auf die Zeichnung Bezug genommen, in deren Figur 1 ein Ausführungsbeispiel einer Schaltung zur Selbstüberwachung eines FI-Schalters schematisch veranschaulicht ist. In den Figuren 2 bis 4 sind verschiedene Signalformen, die innerhalb der Schaltung auftreten, jeweils in einem Diagramm dargestellt.

In der Ausführungsform gemäß Figur 1 besteht eine eigensichere Selbstüberwachung eines FI-Schalters mit einem DI-Zusatz aus einer Überwachungsschaltung 2, die eine Kompensationsspule 4 mit einer getrennten Stromversorgung und eine Haltespule 8 enthält, und einer vorgeschalteten Ansteuerschaltung 10. Diese Ansteuerschaltung 10 besteht im wesentlichen aus einer Funktionskette mit einem Differenzierglied 12 und zwei Verstärkern 14 und 15. Das Differenzierglied 12 enthält einen Differenzierwiderstand 16 und zwei Differenzierkondensatoren 17 und 18. Drei Eingangswiderstände sind mit 20 bis 22 bezeichnet. Über einen Eingang E₄ mit einem veränderbaren Widerstand 24 kann eine einstellbare Spannung von beispielsweise -U_{b1} = - 15 V vorgegeben werden. Der Verstärker 14, beispielsweise ein Operationsverstärker, ist mit einer Gegenkopplung versehen, die einen Gegenkopplungskondensator 26 und einen Gegenkopplungswiderstand 27 enthält, denen eine Gegeneinanderschaltung von Zenerdioden 28 und 29 parallelgeschaltet ist. Dem +-Eingang des Verstärkers 14 ist eine Kombination vorgeschaltet, die einen Kondensator 30 und einen Widerstand 31 sowie eine Diode 32, einen weiteren Widerstand 33 und noch einen Kondensator 34 enthält. Der Verstärker 15, der vorzugsweise ebenfalls ein Operationsverstärker sein kann, ist ebenfalls mit einer Gegenkopplung versehen, die einen Gegenkopplungswiderstand 35 enthält, dem eine Gegeneinanderschaltung von Zenerdioden 36 parallelgeschaltet ist. Dem negativen Eingang des Verstärkers 15 ist ein Eingangswiderstand 37 und dem positiven Eingang eine Kopplungsdiode 38 vorgeschaltet. Die Ausgangsleitung des Verstärkers 15 enthält in Reihe mit der Haltespule 8 einen Schutzwiderstand 41 und einen Arbeitswiderstand 42, der einseitig an Masse gelegt ist.

Eine Anordnung zur Auskopplung von Erkennungsimpulsen enthält einen Kopplungskondensator 44 sowie zwei Steuerwiderstände 45 und 46; ein Verstärker ist mit 48 bezeichnet. Ein Sägezahngenerator 50 enthält einen Ladewiderstand 51 und einen Kondensator 52. Ein weiterer Verstärker 54, dessen Basis-Emitterstrecke ein Kondensator 55 parallelgeschaltet ist, ist über eine Reihenschaltung eines Widerstandes 56 mit einer Zenerdiode 57 sowie einer Kopplungsdiode 58 an den Sägezahngenerator 50 angeschlossen. Zwei Dioden 79 und 80 kompensieren den Temperaturgang der Basis-Emitterstrecke des Verstärkers 54, der in Reihe mit einer Diode 81 am Arbeitswiderstand 42 liegt. Ein Kopplungswiderstand ist mit 59 und ein Siebkondensator mit 60 bezeichnet. Eine Zenerdiode ist mit 64 und eine weitere Kopplungsdiode mit 65 bezeichnet.

Die Kompensationsspule 4 ist über einen zur Stromeinstellung dienenden Vorwiderstand 67 an einen Eingang E₃ angeschlossen, der an eine positive Versorgungsspannung +U_{b2} von beispielsweise +15 V angeschlossen sein kann. In Reihe mit der Kompensationsspule 4 liegt eine Zenerdiode 68 und parallel zu ihr ein Widerstand 69. Das positive Ende der Kompensationsspule 4 ist über eine Reihenschaltung einer Kopplungsdiode 72 mit einer Zenerdiode 74 an den positiven Eingang des Verstärkers 14 und über eine Reihenschaltung einer Kopplungsdiode 73 mit einer Zenerdiode 75 an den positiven Eingang des Verstärkers 15 angeschlossen. Ein Eingangswiderstand des Verstärkers 15 ist mit 76 bezeichnet.

Eine am Eingang E₁ eingespeiste Impulsfolge von Rechteckimpulsen 5 gemäß dem Diagramm der Figur 2 wird im Differenzierglied 12 differenziert und über den Kondensator 18 und den Eingangswiderstand 20 als Impulsfolge mit Impulsen 6 gemäß dem Diagramm der Figur 3 dem negativen Eingang des Verstärkers 14 zugeführt. Mit der Einspeisung einer negativen Spannung von beispielsweise -U_{b1} = -15 V am Eingang E₄ wird der am Ausgang des Verstärkers 15 am Knotenpunkt A erforderliche Haltestrom in der Haltespule 8 als Ruhestrom eingestellt. Am Ausgang des Verstärkers 15 im Knotenpunkt A erscheint dann eine Impulsfolge mit Erkennungsimpulsen 7 in der Form von Nadelimpulsen gemäß dem Diagramm der Figur 4, von denen die negativen Teile durch die Ansteuerschaltung abgeschnitten werden. Diese Impulse werden über den Kopplungskondensator 44 ausgekoppelt und über den Steuerwiderstand 46 dem Verstärker 48 zugeführt, der den über den Ladewiderstand 51 aufgeladenen Kondensator 52 des Sägezahngenerators 50 periodisch entlädt. Bleiben diese Erkennungsimpulse 7 im Störungsfall aus, so steigt die Spannung am Kondensator 52 an und wird über den Kopplungswiderstand 59 und die Kopplungsdiode 63 dem positiven Eingang des Verstärkers 15 zugeführt, was eine Umkehr der Stromrichtung des Haltestromes in der Haltespule 8 zur Folge hat und damit zur Auslösung des Fehlerstromschutzschalters führt.

Die gleiche Wirkung hat die Einspeisung eines Fehlerstromes I_{F} am Eingang E₂, der über den Eingangswiderstand 21 dem Verstärker 14 vorgegeben wird.

Geht infolge einer Störung an den Verstärkern 14 oder 15 das Potential im Knotenpunkt A auf -U_{b1}, so wird der Verstärker 54 durchgesteuert. Das Potential zwischen der Haltespule 8 und dem Arbeitswiderstand 42 wird ebenfalls negativ und damit die Haltespule 8 stromlos, was ebenfalls zur Auslösung führt.

Fällt der Verstärker 48 aus, so wird die Haltespule 8 ebenfalls stromlos und der Fehlerstromschutzschalter wird ausgelöst. Falls der Verstärker 48 durchlegiert, so erhält der Kondensator 52 vom Eingang E₅ negatives Potential, das über den Kopplungswiderstand 59 und die Zenerdiode 64 sowie die Kopplungsdiode 65 auf den positiven Eingang des Verstärkers 14 übertragen wird, was ebenfalls eine Stromumkehr in der Haltespule 8 und damit eine Auslösung bewirkt.

Bei einer Unterbrechung in der Kompensationsspule 4 erhält der Knotenpunkt B das positive Potential +U_{b2} des Eingangs E₃, das über die Kopplungsdiode 73 und die Zenerdiode 75 auch auf den positiven Eingang des Verstärkers 15 übertragen wird, was ebenfalls zur Auslösung führt.

Beim Ausfall der Stromversorgung +U_{b2} am Eingang E₃ fällt das Potential im Knotenpunkt B auf das Potential -U_{b1} des Eingangs E₆ und dieses negative Potential wird über die Kopplungsdiode 72 und die Zenerdiode 74 auch auf den positiven Eingang des Verstärkers 14 übertragen, was ebenfalls zu einer Umkehr der Stromrichtung in der Haltespule 8 und damit zur Auslösung führt.

Die in der Zeichnung nicht dargestellte Magnetspule des Schaltschlosses wird durch den Arbeitsstrom in der Kompensationsspule 4 entregt. Zugleich wird der Haltespule 8 ein mit den Erkennungsimpulsen 7 überlagerter Haltestrom zugeführt. Bei intakter Schaltung werden diese Erkennungsimpulse 8 am Ende der Funktionskette erkannt und die eigensichere Überwachungsschaltung bewirkt bei störungsbedingtem Ausbleiben der Erkennungsimpulse 7 über zwei Strompfade eine Stromrichtungsumkehr oder wenigstens eine Unterbrechung des Stromes in der Haltespule 8, wodurch in beiden Fällen eine Auslösung erfolgt.

Bei Netzausfall werden beide Wicklungen, die Kompensationsspule 4 und die Haltespule 8, stromlos und ein Dauermagnet hält das Schaltschloß geschlossen.

## Patentansprüche

1. Fehlerstromschutzschalter, der ein Schaltschloß mit einem Magnetauslöser und Mittel zur Selbstüberwachung enthält, **dadurch gekennzeichnet**, daß dem Schaltschloß ein Ruhestromkreis mit einer Haltespule (8) zur Ruhestromauslösung einerseits und ein Arbeitsstromkreis mit einer Kompensationsspule (4) zur Arbeitsstromauslösung andererseits zugeordnet ist, wobei die Kombination der Arbeitsstrom- mit der Ruhestromauslösung im Rahmen der eigensicheren Selbstüberwachung derart erfolgt, daß bei einer Störung das Schaltschloß durch Stromrichtungsumkehr in der Haltespule (8) entriegelt wird oder eine Auslösung durch Anlegen des gleichen Potentials an beide Enden der Haltespule (8) erfolgt.

2. Fehlerstromschutzschalter nach Anspruch 1, **dadurch gekennzeichnet**, daß die Haltespule (8), deren eines Ende auf Mittelpotential liegt, durch wenigstens einen Verstärker (14, 15) angesteuert wird.

3. Fehlerstromschutzschalter nach Anspruch 1, **dadurch gekennzeichnet**, daß eine Überwachungsschaltung (2) vorhanden ist, die den Arbeitsstromkreis mit der Kompensationsspule (4), die an einem Eingang (E₃) an eine Stromversorgung (+U_{b2}) angeschlossen ist, und die den Ruhestromkreis mit der Haltespule (8) enthält, deren Haltestrom Erkennungsimpulse (7) überlagert sind, die von einer Ansteuerschaltung (10) vorgegeben sind.

4. Fehlerstromschutzschalter nach Anspruch 3, **dadurch gekennzeichnet**, daß die Ansteuerschaltung (10) für die Haltespule (8) eine Funktionskette enthält, deren Eingang (E₁) eine Impulsfolge von Rechteckimpulsen (5) für die Erkennungsimpulse (7) vorgegeben ist und die wenigstens einen Verstärker (14, 15) enthält und deren Ausgangssignal der Überwachungsschaltung (2) vorgegeben ist, die beim Ausbleiben der Erkennungsimpulse (7) im Falle einer Störung durch entsprechende Ansteuerung des Verstärkers (14, 15) eine Umkehr der Stromrichtung in der Haltespule (8) bewirkt.

## Claims

1. Fault-current circuit breaker which contains a latching mechanism with a magnetic trip element and means for self-monitoring, characterised in that associated with the latching mechanism there is a closed circuit with a holding coil (8) for closed-circuit tripping, on the one hand, and an open circuit with a compensating coil (4) for open-circuit tripping on the other hand, with the combination of the open-circuit tripping with the closed-circuit tripping taking place within the context of the intrinsically safe self-monitoring in such a way that in the case of a disturbance the latching mechanism is unlocked by current reversal in the holding coil (8) or else tripping is effected by applying the same potential to both ends of the holding coil (8).

2. Fault-current circuit breaker according to claim 1, characterised in that the holding coil (8), the one end of which is at mid-potential, is activated by means of at least one amplifier (14, 15).

3. Fault-current circuit breaker according to claim 1, characterised in that a monitoring circuit arrangement (2) is provided, which monitoring circuit arrangement (2) contains the open circuit with the compensating coil (4), which at an input (E₃) is connected to a current supply (+U_{b2}), and contains the closed circuit with the holding coil (8), superimposed upon the holding current of which there are identification pulses (7) which are prescribed by an activating circuit arrangement (10).

4. Fault-current circuit breaker according to claim 3, characterised in that the activating circuit arrangement (10) for the holding coil (8) contains a function chain, prescribed for the input (E₁) of which chain there is a pulse train of square-wave pulses (5) for the identification pulses (7) and which chain contains at least one amplifier (14, 15) and the output signal of which chain is prescribed for the monitoring circuit arrangement (2) which in the absence of the identification pulses (7), in the event of a disturbance, by means of corresponding activation of the amplifier (14, 15) effects a reversal of the current direction in the holding coil (8).

## Revendications

1. Disjoncteur à courant de défaut, qui contient une serrure de verrouillage comportant un déclencheur magnétique et des moyens d'autocontrôle, caractérisé par le fait qu'à la serrure de verrouillage est associé un circuit de repos comportant une bobine de maintien (8) pour le déclenchement par un courant de repos, d'une part, et un circuit de travail comportant une bobine de compensation (4) pour le déclenchement par un courant de travail, d'autre part, la combinaison du déclenchement par le courant de travail et du déclenchement par le courant de repos s'effectuant dans le cadre de l'autocontrôle à sécurité intrinsèque de telle sorte que, dans le cas d'une perturbation, la serrure de verrouillage est déverrouillée par l'inversion du sens du courant dans la bobine de maintien (8) ou un déclenchement est exécuté par application du même potentiel aux deux extrémités de la bobine de maintien (8).

2. Disjoncteur à courant de défaut suivant la revendication 1, caractérisé par le fait que la bobine de maintien (8), dont une extrémité est placée au potentiel médian, est commandée par au moins un amplificateur (14,15).

3. Disjoncteur à courant de défaut suivant la revendication 1, caractérisé par le fait qu'il est prévu un circuit de contrôle (2), qui comporte le circuit de travail possédant la bobine de compensation (4), qui est raccordée, par une entrée (E₃), à une alimentation en courant (+U_{b2}), et qui contient le circuit à courant de repos comportant la bobine de maintien (8), au courant de repos de laquelle sont superposées des impulsions d'identification (7), qui sont prédéterminées par un circuit de commande (10).

4. Disjoncteur à courant de défaut suivant la revendication 3, caractérisé par le fait que le circuit de commande (10) pour la bobine de maintien (8) contient une chaîne fonctionnelle, dont l'entrée (E₁) reçoit une suite d'impulsions rectangulaires (5) pour des impulsions d'identification (7) et qui contient au moins un amplificateur (14,15) et dont le signal de sortie est appliqué au circuit de contrôle (2) qui, en cas d'absence des impulsions d'identification (7), lors d'une perturbation, provoque une inversion du sens de courant dans la bobine de maintien (8), au moyen d'une commande correspondante de l'amplificateur (14,15).
